# EUROPÄISCHE PATENTANMELDUNG

(11) **EP 4 807 471 A1**
(43) Veröffentlichungstag der Anmeldung: **16.09.2026**
(21) Anmeldenummer: 25163163.6
(22) Anmeldetag: 12.03.2025
(51) Int. Cl.: G05B 13/02

(54) **VERFAHREN UND SYSTEM ZUM BETRIEB EINES TECHNISCHEN GERÄTS MIT EINER STEUERVORRICHTUNG**

(71) Anmelder: Siemens Aktiengesellschaft, 80333 München (DE)
(72) Erfinder: Schall, Daniel, 2020 Hollabrunn (AT)
(74) Vertreter: Siemens Patent Attorneys

(57) **Zusammenfassung**

Computer-implementiertes Verfahren zum Betrieb eines technischen Geräts mit einer Steuervorrichtung, umfassend folgende Schritte:
a) Bereitstellen einer Benutzer-Anfrage betreffend den Betrieb des technischen Geräts,
b) Bereitstellen eines trainierten Betriebs-Modells auf Basis künstlicher Intelligenz zum Betrieb des technischen Geräts,
c) Bilden einer Such-Anfrage aus der Benutzer-Anfrage, und Bestimmen einer ersten Antwort auf die Such-Anfrage durch ein verbundenes "Retrieval-Augmented Generation"-, RAG-, System, welches durch eine verbundene erste Rechenvorrichtung gebildet ist,
d) Bilden einer Schätzungs-Anfrage aus der Benutzer-Anfrage, und Bestimmen einer zweiten Antwort auf die Schätzungs-Anfrage durch ein verbundenes "föderiertes Lernen"-, FL-, System zum Betrieb des technischen Geräts, welches durch eine verbundene zweite Rechenvorrichtung gebildet ist,
e) Kombinieren der ersten Antwort mit der zweiten Antwort mithilfe einer bereitgestellten Gewichts-Funktion, und Erzeugen einer angepassten Eingabeaufforderung für das Betriebs-Modell mithilfe der Gewichts-Funktion, und Bestimmen einer Antwort auf die angepasste Eingabeaufforderung mithilfe des Betriebs-Modells, durch eine verbundene dritte Rechenvorrichtung,
f) Betreiben des technischen Geräts durch die Steuervorrichtung mithilfe von Steuersignalen, welche der dritten Rechenvorrichtung aus der zuvor erhaltenen Antwort abgeleitet werden.

## Beschreibung

Die Erfindung betrifft ein computer-implementiertes Verfahren und ein System zum Betrieb eines technischen Geräts mit einer Steuervorrichtung.

Die Erfindung betrifft ferner ein Computer-Programm-Produkt.

In der Industrie werden im Zuge der Digitalisierung bei der Herstellung oder Bearbeitung von Produkten, aber auch beim Betrieb von technischen Anlagen und Geräten immer häufiger Modelle auf Basis maschinellen Lernens dazu verwendet, um mithilfe einer Steuervorrichtung oder einer Überwachungsvorrichtung unter Anwendung entsprechender Steuerinstruktionen ein technisches Gerät zu steuern, zu betreiben oder zu überwachen, wobei die Verwendung eines Modells mit hoher Genauigkeit, also einer möglichst genauen Abbildung der jeweiligen physischen Repräsentation des Modells, eine wichtige Rolle spielt.

Das Anpassen von "Industrial Foundation"-Modellen (kurz IFM) auf der Grundlage von Anpassungen von Eingabeaufforderungen (engl. "prompt tuning", kurz PT), "Retrieval-Augmented Generation" (RAG) oder Feinabstimmung umfasst die Änderung des Verhaltens eines vortrainierten Modells, um es besser an eine Domäne anzupassen.

PT und RAG sind leichtgewichtige Ansätze, um die IFMs ohne erneutes Training an einen bestimmten Kontext anzupassen, was unerlässlich ist, um vielseitige Anwendungen in der Industrie zu unterstützen.

Unter "retrieval-augmented generation" (RAG) versteht man ein Softwaresystem, welches Information Retrieval mit einem großen Sprachmodell (engl. "large language model", kurz LLM) kombiniert. Eine Abfrage, welche an das System gestellt wird, kann hierbei auf Informationen aus (externen) Informationsquellen, Datenbanken oder dem World Wide Web zugreifen statt nur auf die Trainingsdaten des Modells, was die Genauigkeit und die Robustheit der generierten Inhalte erhöhen, indem es die Modelle mit aktuellen und spezifischen Informationen versorgt.

Retrieval-Augmented Generation (RAG) besteht im Wesentlichen aus vier Stufen, nämlich Datenindexierung, Datenabruf, Augmentierung und Antwortgenerierung.

Föderales Lernen (FL) beschreibt eine Technik im Bereich des maschinellen Lernens, bei der ein Modell auf mehreren Geräten trainiert wird. Jedes teilnehmende Gerät verfügt über einen eigenen lokalen Datensatz, der nicht mit anderen Teilnehmern ausgetauscht wird. Im Gegensatz dazu gibt es beim herkömmlichen maschinellen Lernen einen zentralen Datensatz.

Durch diese Technik bauen mehrere Teilnehmer ein gemeinsames robustes Modell unter Berücksichtigung kritischer Probleme wie Datenschutz, Datensicherheit, Zugriffsrechte und Zugang zu heterogenen Daten auf.

Bei der Eingabeaufforderungsabstimmung wird das Eingabeaufforderungs- oder Eingabeformat geändert, das dem Modell zugewiesen wird, um sein Verhalten für eine bestimmte Aufgabe zu steuern.

Dies kann die Erstellung maßgeschneiderter Eingabeaufforderungen oder Anweisungen umfassen, die das Modell dazu veranlassen, die gewünschten Ergebnisse zu erzielen.

Dabei ist es vorteilhaft, dass ein einfacher Ansatz angewandt wird, welcher minimale Rechenressourcen im Vergleich zum erneuten Trainieren des gesamten Modells erfordert, was insbesondere für Aufgaben effektiv sein kann, bei denen das Eingabeformat das Verhalten des Modells stark beeinflusst.

Allerdings ist das Verfahren möglicherweise nicht für Aufgaben geeignet, die eine erhebliche Modellanpassung oder eine feinkörnige Steuerung erfordern, und erfordert möglicherweise spezielles Fachwissen, um effektive Eingabeaufforderungen zu entwerfen.

Dabei ist die Abstimmung der Eingabeaufforderung wichtig, um ein vortrainiertes Modell schnell und ohne umfangreiches erneutes Training an neue Aufgaben oder Domänen anzupassen.

Dies ermöglicht Benutzern, vorhandene Modellfunktionen zu nutzen und gleichzeitig aufgabenspezifische Anleitungen bereitzustellen.

Bei der "Retrieval-Augmented Generation" RAG wird ein generatives Modell mit einem "Retriever" kombiniert, wodurch das Modell während der Generierung auf externes Wissen zugreifen kann. Durch das Abrufen relevanter Informationen aus einer großen Wissensdatenbank kann das Modell genauere und kontextuell relevante Ausgaben erzeugen.

Dabei ist es vorteilhaft, dass das kontextuelle Verständnis des Modells durch die Einbeziehung von externem Wissen verbessert, sowie die Qualität und Relevanz der generierten Ergebnisse verbessert, insbesondere bei Aufgaben, die sachliche Genauigkeit oder kontextuelles Verständnis erfordern, und bietet einen flexiblen Ansatz für die Nutzung externer Daten, ohne die Modellarchitektur zu ändern.

Allerdings erfordert das Verfahren für den Abruf den Zugriff auf eine große Wissensdatenbank, die möglicherweise nicht immer verfügbar oder machbar ist. Der Zugriff auf externes Wissen während der Generierung kann zu unerwünschten Latenzen führen, die sich auf Echtzeitanwendungen ungünstig auswirken.

Dabei ist es vorteilhaft, wenn es bei Anfragen auf Kontextverständnis und sachliche Richtigkeit ankommt. Es ermöglicht dem Modell, nahtlos auf externes Wissen zuzugreifen und es zu integrieren, was die Leistung bei Aufgaben wie Fragebeantwortung, Zusammenfassung und Dialoggenerierung verbessert.

Die RAG ist ein vorteilhafter Faktor für den Erfolg beim Einsatz von IFM.

Im Stand der Technik ist die Daten-Erfassung und Daten-Aggregation, beispielsweise durch das Sammeln relevanter Daten aus verschiedenen internen Quellen wie Dokumenten, Berichten, EMails, Kundeninteraktionen und Datenbanken häufig ein komplexer und zeitaufwändiger Prozess.

Die Ontologie-Entwicklung und Wissensrepräsentation, nämlich das Entwerfen einer effektiven Ontologie oder eines Wissensgraphen, der domänenspezifische Konzepte, Beziehungen und Hierarchien erfasst, ist eine nicht-triviale Aufgabe.

Die Entwicklung von Ontologien erfordert Fachkenntnisse und die Zusammenarbeit zwischen Fachexperten, um relevante Entitäten, Attribute und semantische Beziehungen zu definieren.

Das Erstellen einer gut strukturierten Ontologie erleichtert die effiziente Datenorganisation, den Abruf und die Wissensinferenz innerhalb der Wissensdatenbank.

Die größte Herausforderung ist jedoch die Pflege und Aktualisierung des Wissens: Die Pflege und Aktualisierung der internen Wissensdatenbank ist ein fortlaufender Aufwand, der dedizierte Ressourcen und Prozesse erfordert.

Es ist Aufgabe der Erfindung eine Lösung bereitzustellen, welche ein Zustandsproblem löst, nämlich einen verlässlichen Zugang zu einer großen Wissensdatenbank für einen jeweiligen Abruf mit verbesserter Latenz erfordert, die möglicherweise nicht immer verfügbar oder machbar ist.

Somit soll eine neue Lösung die Verfügbarkeit, die Systemintegrität und gleichzeitig die Genauigkeit im Stand der Technik verbessern.

Die erfindungsgemäße Aufgabe wird durch ein computer-implementiertes Verfahren zum Betrieb eines technischen Geräts mit einer Steuervorrichtung gelöst, umfassend folgende Schritte:
a) Bereitstellen einer Benutzer-Anfrage betreffend den Betrieb des technischen Geräts,
b) Bereitstellen eines trainierten Betriebs-Modells auf Basis künstlicher Intelligenz zum Betrieb des technischen Geräts,
c) Bilden einer Such-Anfrage aus der Benutzer-Anfrage, und Bestimmen einer ersten Antwort auf die Such-Anfrage durch ein verbundenes "Retrieval-Augmented Generation"-, RAG-, System, welches durch eine verbundene erste Rechenvorrichtung gebildet ist,
d) Bilden einer Schätzungs-Anfrage aus der Benutzer-Anfrage, und Bestimmen einer zweiten Antwort auf die Schätzungs-Anfrage durch ein verbundenes "föderiertes Lernen"-, FL-, System zum Betrieb des technischen Geräts, welches durch eine verbundene zweite Rechenvorrichtung gebildet ist,
e) Kombinieren der ersten Antwort mit der zweiten Antwort mithilfe einer bereitgestellten Gewichts-Funktion, und Erzeugen einer angepassten Eingabeaufforderung für das Betriebs-Modell mithilfe der Gewichts-Funktion, und Bestimmen einer Antwort auf die angepasste Eingabeaufforderung mithilfe des Betriebs-Modells, durch eine verbundene dritte Rechenvorrichtung,
f) Betreiben des technischen Geräts durch die Steuervorrichtung mithilfe von Steuersignalen, welche der dritten Rechenvorrichtung aus der zuvor erhaltenen Antwort abgeleitet werden.

Der erfindungsgemäße Mixture of Experts (MoE)-Ansatz integriert die Modelle "retrieval-augmented generation" (RAG) und föderiertes Lernen (engl. "federated learning", kurz FL), um deren jeweilige Stärken zu nutzen und erzeugt mithilfe dieser Aggregation eine angepasste Eingabeanforderung an ein großen Sprachmodell, wodurch auf einfache Weise eine verlässliche und genaue Antwort auf eine Benutzer-Anfrage geliefert werden kann.

In MoE bestimmt ein sogenanntes "Gating"-Netzwerk dynamisch den Beitrag jedes Modells (RAG und FL) basierend auf der Eingabeabfrage oder dem Kontext.

Der RAG-Experte nutzt externes Wissen aus einer großen Wissensdatenbank, um kontextrelevante Antworten zu generieren.

In der Zwischenzeit lernt der FL-Experte aus dezentralen Datenquellen und wahrt gleichzeitig den Datenschutz durch kollaborative Trainings, wodurch die Systemintegrität verbessert werden kann.

Die Ergebnisse der RAG- und FL-Experten werden unter Verwendung der vom Gating-Netzwerk erzeugten Gating-Koeffizienten kombiniert, so dass das MoE-Modell den Beitrag jedes Experten adaptiv, also flexibel - beispielsweise je nach Betriebs-Situation oder Betriebs-Kontext des technischen Geräts oder des Klienten - und auch zeitlich variabel, anpassen kann.

Dieser hybride Ansatz verbessert die Leistung des Modells, indem er sowohl das kontextuelle Verständnis von RAG als auch die kollaborativen Lernfähigkeiten von FL nutzt.

Insgesamt ermöglicht MoE vielseitigere und effektivere Lösungen für Aufgaben, die kontextuelles Verständnis und Zusammenarbeit über dezentrale Datenquellen hinweg erfordern.

Durch die Erfindung wird eine hybride Integration von RAG und FL erreicht.

Im Gegensatz zu traditionellen Ansätzen, die sich in der Regel entweder auf "retrieval-augmented generation" oder "federated learning" unabhängig voneinander konzentrieren, integriert der MoE-Ansatz nun beide Modelle, was insgesamt zu einer verbesserten Leistung führt, indem sie das kontextuelle Verständnis von RAG und das kollaborative Lernen von FL gleichzeitig nutzt.

Außerdem kann dadurch ein adaptiver Modellbeitrag berücksichtigt werden, da der Beitrag jedes Experten (RAG und FL) basierend auf der Eingabeabfrage oder dem Kontext über ein Gating-Netzwerk dynamisch angepasst wird.

Dieser adaptive Mechanismus stellt sicher, dass das Modell die Stärken jedes Experten flexibel nutzen kann, um die Leistung für verschiedene Szenarien und Datenverteilungen zu optimieren.

Ferner wird das kontextuelle Verständnis und die Zusammenarbeit verbessert, denn sowohl kontextuelles Verständnis als auch Zusammenarbeit können über dezentrale Datenquellen hinweg erforderlich sein.

Durch die Kombination der Fähigkeit der RAG, externes Wissen einzubeziehen, mit dem datenschutzfreundlichen kollaborativen Lernen von FL bietet MoE eine einzigartige Lösung, die sowohl die Herausforderungen des kontextuellen Verständnisses als auch der Datendezentralisierung angeht.

Die Zusammenarbeit erfolgt ferner unter Wahrung der Privatsphäre, was die Datensicherheit verbessert, denn die datenschutzfreundlichen Eigenschaften von FL werden geschickt genutzt, um sicherzustellen, dass sensible Daten geschützt bleiben und gleichzeitig kollaboratives Training über dezentrale Geräte oder Datenquellen hinweg ermöglicht wird.

Die Verbesserung der Privatsphäre von Daten verbessert auch die Systemintegrität und den Schutz gegen Datendiebstahl oder Manipulation, und folglich auch die Verfügbarkeit des Systems.

Das Modell - das Betriebs-Modell - dient dazu, um beim Betrieb eines technischen Geräts, welches mit einer entsprechenden Steuervorrichtung verbunden ist, angewendet zu werden.

Die Ressourcen der Geräte-Plattform zum Betreiben des technischen Geräts hinsichtlich Software und Hardware können beispielsweise die Rechenleistung und/oder die Speicherleistung und/oder die Kommunikationsleistung der Rechenvorrichtung betreffen.

Typischerweise weist eine Steuervorrichtung nur begrenzte Ressourcen zur Verarbeitung von Modellen auf, also einen wenig leitungsfähigen Prozessor und begrenzten Speicher, im Vergleich zu Ressourcen einer Workstation oder eines Servers für eine Cloud-Infrastruktur.

Das technische Gerät kann sehr unterschiedlich sein, beispielsweise eine Pumpe, eine elektronische Steuerung, wie ein Wechselrichter, ein elektronischer Sensor, wie ein Beschleunigungssensor oder ein bildgebender Sensor, wie eine Kamera, eine Produktionsmaschine, wie ein Montage-Roboter, ein Transport-Roboter für die Logistik, eine CNC-Fräsmaschine, usw.

Das technische Gerät kann dessen Betrieb durch Betriebsparameter abbilden, die beispielsweise durch entsprechende Sensoren erfasst werden, oder auch durch Analyse von Kommunikations-Nachrichten bei Betrieb bestimmt werden.

Betriebsparameter können beispielsweise die Stromaufnahme, Spannungswerte von Teilsystemen, oder eine Leistungsabgabe des technischen Geräts sein, aber auch Wärme-, Lärm- oder Vibrationsemissionen, oder die Anzahl oder Größe von durch das technische Gerät erzeugten Betriebsdatensätzen.

Die Steuervorrichtung zu einem solchen technischen Gerät kann eine analoge Elektronik-Schaltung sein, eine pneumatische Steuerung, oder eine Mikroprozessorschaltung mit digitalen Steueranschlüssen, welche wiederum Leistungselektronik-Komponenten zum Betreiben von Aktuatoren ansteuert.

Die Steuervorrichtung generiert Steuerinstruktionen oder Steuersignal zum Betrieb des verbundenen technischen Geräts, welche mithilfe eines Modells auf Basis künstlicher Intelligenz, nämlich des - aus einem bereitgestellten großen IFM/LVM - erzeugten Anwendungs-Modells.

Die Kriterien für die Ausführung des Modells mithilfe der Steuerinstruktionen oder Steuersignale auf einer Rechenvorrichtung wie einer Edge-Vorrichtung können Leistungs-Kriterien der Rechenvorrichtung sein, welche die Effizienz der Verarbeitung von Recheneigenschaften und/oder Speichereigenschaften und/oder Kommunikationseigenschaften der Rechenvorrichtung beschreiben, oder auch Leistungs-Kriterien für die Steuervorrichtung bei der Erzeugung und Ausführung entsprechender Steuersignale zum Betrieb des technischen Geräts.

Die Anwendung eines individuellen Modells zum Betrieb des technischen Geräts ist besonders günstig, wenn beispielsweise mehrere Produktions- oder Bearbeitungsmaschinen innerhalb eines Klienten-Server-System betrieben werden, diese aber unterschiedliche Produkte herstellen und daher unterschiedliche Kl-Modelle für die jeweiligen Herstellungs-/ Bearbeitungsprozesse der jeweiligen Produkte anwenden.

Analog dazu können beispielsweise auch technische Geräte wie Pumpen oder Motoren unterschiedlich von jeweiligen Klienten mit unterschiedlichen Kl-Modellen performant betrieben werden.

Die Eingabeaufforderung bezieht sich auf ein bereitgestelltes, vorab trainiertes großes Sprachmodell (LLM).

In einer Weiterbildung der Erfindung ist es vorgesehen, dass das RAG-System eine Datenbank und/oder ein vorab trainiertes Modell auf Basis künstlicher Intelligenz zum Betrieb des technischen Geräts umfasst, welche jeweils eine spezifische Datenmenge inkludiert, welche den Betrieb des technischen Geräts in seiner Betriebsumgebung und/oder Anwendung beschreibt, wobei die Betriebsumgebung die physische Anordnung und/oder physikalischen Betriebsparameter des technischen Geräts beschreibt.

Die spezifische Datenmenge beschreibt beispielsweise den Betrieb des technischen Geräts in seiner Betriebsumgebung, wie die aktuelle Betriebstemperatur, die Grenzen der zulässigen Betriebstemperatur, die zulässige oder auch unzulässige Dauer außerhalb dieser Grenzen.

Die spezifische Datenmenge beschreibt beispielsweise die Anwendung des technischen Geräts, wie die Verwendung einer Pumpe in einer Klimaanlage oder einer Abwasseraufbereitungsanlage, oder die Verwendung eines Wechselrichters für eine vorgesehene Leistungsanwendung, wie bei einer Photovoltaik-Anlage oder beim Betrieb einer Motorsteuerung.

In einer Weiterbildung der Erfindung ist es vorgesehen, dass das Verfahren zum Betrieb des technischen Geräts wiederholt ausgeführt wird und dabei jeweilige physikalische Betriebsparameter zum Betrieb des technischen Geräts erfasst werden, und für die Betriebsparameter vorbestimmte Wertebereiche festgelegt sind, für welche jeweilige Gewichts-Funktionen festgelegt sind, und im Schritt e) eine, dem aktuellen Betriebsparameter entsprechende Gewichts-Funktion angewandt wird.

In einer Weiterbildung der Erfindung ist es vorgesehen, dass die Gewichts-Funktion für eine jeweilige Kombination von Werten oder Wertebereichen der individuellen physikalischen Betriebsparameter festgelegt ist, und die Gewichts-Funktion durch ein Gewichts-Modell auf Basis künstlicher Intelligenz abgebildet ist, welches zur Auswahl der Gewichts-Funktion verwendet wird.

Die Betriebsparameter betreffen den Betrieb des verbundenen technischen Geräts.

Eine aktuell bereitgestellte Gewichts-Funktion wird demnach aus einem bereitgestellten Gewichts-Modell gebildet und anhand von Kombinationen von Werten oder Wertebereichen der individuellen physikalischen Betriebsparameter festgelegt beziehungsweise ausgewählt.

Das Gewichts-Modell beruht auf künstlicher Intelligenz und wird anhand von historischen Daten für solche Betriebsparameter-Kombinationen beispielsweise manuell trainiert, beispielsweise besonders günstige oder besonders ungünstige Betriebszustände oder Betriebsmodi, und entsprechend markiert.

Mit anderen Worten kann dies beispielsweise durch die Verwendung eines gesonderten Gewichts-Modells auf Basis künstlicher Intelligenz erreicht werden, bei welchem mehrere Gewichts-Funktionen Trainingsdaten bilden, und das Gewichts-Modell eine Prognose für eine entsprechende günstige Aggregation durchführt.

In einer Weiterbildung der Erfindung ist es vorgesehen, dass die physikalischen Betriebsparameter elektrische Betriebsparameter und/oder mechanische Betriebsparameter und/oder thermische Betriebsparater und/oder meteorologische Betriebsparameter sind.

Die Betriebsparameter können jeweils statische oder dynamische Parameter sein.

Elektrische Betriebsparameter können beispielsweise die Stromaufnahme, die Leistungsabgabe, die Höhe oder die Schwankung der Betriebsspannung sein.

Dynamische mechanische Betriebsparameter können beispielsweise Vibrationen einer Pumpe sein, die mithilfe entsprechender Sensoren erfasst werden, oder ein erzeugtes Drehmoment eines Motors.

Statische mechanische Betriebsparameter können beispielsweise die Einbaulage oder die Anordnung im Verhältnis zu anderen Vorrichtungen oder Teilsystemen sein.

Thermische Betriebsparater können beispielsweise Wärmeemissionen oder Wärmeverteilungen auf dem technischen Gerät oder dessen Komponenten, wie ein Halbleiterbauteil, sein.

Meteorologische Betriebsparameter können die Luftfeuchtigkeit oder die Umgebungstemperatur des technischen Geräts sein.

In einer Weiterbildung der Erfindung ist es vorgesehen, dass das FL-System ein vorab trainiertes Modell auf Basis künstlicher Intelligenz zum Betrieb des technischen Geräts umfasst, welches auf einem Klienten-Server-System mit einem Server und zumindest einem Klienten bereitgestellt wird, und aus einem globalen Modell auf dem Server und einem jeweiligen lokalen Modell auf dem zumindest einen Klienten erzeugt wird.

Dadurch wird auf effiziente Weise ein Schutz der verwendeten Daten zum Betrieb des technischen Geräts erreicht, wodurch die Datenverarbeitungseffizienz sowie die Kommunikationseffizienz im Klienten-Server-System verbessert werden kann.

In einer Weiterbildung der Erfindung ist es vorgesehen, dass die Steuersignale Steuerinstruktionen zur Ausführung durch einen Prozessor aufweisen.

Dadurch kann auf einfache Weise das erhaltene Modell verwendet werden, um den Betrieb des technischen Geräts zu steuern oder zu überwachen.

In einer Weiterbildung der Erfindung ist es vorgesehen, dass die Steuervorrichtung von einem Klienten eines Klienten-Server-Systems umfasst ist, und vorzugsweise eine Edge-Vorrichtung ist.

Dadurch wird erreicht, dass das Verfahren in einem besonders vorteilhaften Umfeld eingesetzt werden kann, wodurch eine niedrige Systemkomplexität und ein effizienter Betrieb des technischen Geräts erhalten werden können.

In einer Weiterbildung der Erfindung ist es vorgesehen, dass die erste, die zweite und die dritte Rechenvorrichtung von einer gemeinsamen Rechenvorrichtung gebildet sind.

Dadurch kann eine niedrige Systemkomplexität und ein effizienter Betrieb des technischen Geräts erreicht werden.

Die Trainings-Daten sind bevorzugt Betriebsdaten vom Betrieb des technischen Geräts, beispielsweise von Sensoren wie Beschleunigungssensoren erfasst, welche den Betrieb eines Motors überwachen.

Die Benutzer-Anfragen sind bevorzugt Betriebsanalyse-Aufgaben, wie eine prädiktive Wartungsplanung für das technische Gerät, wobei die Suchen durch einen Benutzer oder auch automatisiert durch eine Überwachungsvorrichtung ausgeführt werden können.

Die Steuersignale sind bevorzugt Steuerinstruktionen, welche zur Ausführung durch einen Prozessor vorgesehen sind, beispielsweise Programmcode.

In einer Weiterbildung der Erfindung ist es vorgesehen, dass die Steuervorrichtung von einem Klienten eines Klienten-Server-Systems umfasst ist, und vorzugsweise eine Edge-Vorrichtung ist.

Dadurch wird erreicht, dass das Anwendungs-Modell auf effiziente Weise auf einer Steuervorrichtung eines Klienten-Server-Systems ausgeführt werden kann, und somit auf einfache Weise, ausgehend von einem zentralen LVM/IFM, jeweils ein reduziertes beziehungsweise komprimiertes Anwendungs-Modell auf mehrere Klienten verteilt werden kann, und darüber hinaus für jeden verbundenen Klienten ein individuelles/spezifisches und daher besonders genaues Anwendungs-Modell innerhalb des Systems erzeugt und für ein jeweiliges technisches Gerät angewendet werden kann.

Die erfindungsgemäße Aufgabe wird durch ein System zum Betrieb eines technischen Geräts mit einem verbundenen Steuergerät gelöst, ferner umfassend einen Prozessor und einen Speicher, wobei das System dazu eingerichtet ist, das Verfahren nach einem der vorhergehenden Ansprüche auszuführen.

In einer Weiterbildung der Erfindung ist es vorgesehen, dass das System ein Klienten-Server-Systems ist, und die Steuervorrichtung von einem Klienten des Klienten-Server-Systems umfasst ist, und vorzugsweise eine Edge-Vorrichtung ist.

Die erfindungsgemäße Aufgabe wird durch ein Computer-Programm-Produkt gelöst, umfassend Befehle, die bei der Ausführung des Programms durch einen Computer diesen veranlassen, das Verfahren/die Schritte des Verfahrens nach einem der vorhergehenden Verfahrens-Ansprüche auszuführen.

Der Computer ist vom System umfasst.

In den nachfolgenden Figuren wird die Erfindung anhand eines Ausführungsbeispiels näher beschrieben. Die Figuren zeigen in
- Fig. 1: ein Ausführungsbeispiel der Erfindung in Form eines Flussdiagramms,
- Fig. 2: ein Ausführungsbeispiel der Erfindung in Form eines Pseudocodes,
- Fig. 3: ein weiteres Ausführungsbeispiel der Erfindung in Form eines Flussdiagramms,
- Fig. 4: ein Ausführungsbeispiel der Erfindung in Form eines Systems.

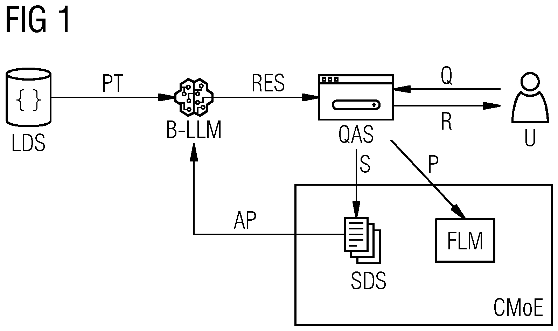

**Fig. 1** stellt ein Ausführungsbeispiel der Erfindung in Form eines Flussdiagramms dar.

Eine bereitgestellte große Datenmenge LDS (engl. "large dataset") wird durch ein Vor-Training PT (engl. "pre-training") in ein Basis-Modell B-LLM eines großem Sprachmodells (engl. "base large language model") abgebildet.

Durch eine Anfrage Q durch einen Nutzer U in Form einer Eingabeaufforderung wird eine Eingabe an das Basis-Modell B-LLM mithilfe eines Anfrage-/Antwort-System QAS gestellt, wodurch eine entsprechende Antwort RES erzeugt wird.

Das Anfrage-/Antwort-System QAS leitet dabei zunächst die Anfrage Q an ein Teilsystem CMoE, was eine Kombination "Mixture of Experts" umfasst, und ein sogenanntes "Gating-Netzwerk" bildet, als Suche SE weiter.

Das Gating-Netzwerk verwendet die Eingabeabfrage oder deren Kontext und erzeugt sogenannte Gating-Koeffizienten, welche die Bedeutung jedes Experten (RAG und FL) für diese Eingabe darstellen.

Die Gating-Koeffizienten werden in der Regel auf die Summe auf Eins normiert, um sicherzustellen, dass sie eine gültige Wahrscheinlichkeitsverteilung darstellen.

Vom Teilsystem CMoE wird ferner eine Schätzung P mithilfe eines föderierten Lernmodells FLM berechnet.

Expertennetzwerke für RAG und FL werden durch jeweilige Expertennetzwerke repräsentiert, nämlich ein entsprechendes RAG- oder ein entsprechendes FL-Modell.

Der RAG-Experte generiert eine Antwort auf der Grundlage der Eingabeabfrage und nutzt dabei den Ansatz der retrieval-augmentierten Generierung, wobei eine spezifische Datenmenge SDS, beispielsweise je nach Organisation oder Domäne erzeugt wird.

Der FL-Experte generiert eine Vorhersage auf der Grundlage der Eingabeabfrage unter Verwendung des Federated Learning-Modells FLM.

Aus den beiden Expertennetzwerken für RAG und FL wird eine angepasste Eingabeaufforderung AP mithilfe einer sogenannten Mischungsschicht gebildet, wobei die Ergebnisse der RAG- und FL-Experten unter Verwendung der vom Gating-Netzwerk erzeugten Gating-Koeffizienten, also Gewichten für die einzelnen Teil-Ergebnisse, kombiniert werden.

Dies geschieht in der Regel durch die Berechnung einer gewichteten Summe der Ausgaben, wobei die Gewichtungen durch die Gating-Koeffizienten bestimmt werden.

Anschließend erfolgt ein Training, währenddessen das Gating-Netzwerk und die Expertennetzwerke (RAG und FL) gemeinsam mittels Backpropagation und einer entsprechenden Verlustfunktion trainiert werden.

Dieses Gewichts-Modell lernt, den RAG- und FL-Experten auf der Grundlage der Eingabeabfrage oder des Kontexts geeignete Gewichtungen zuzuweisen, wodurch die Gesamtleistung des Systems optimiert wird.

Das Gewichts-Modell gibt eine entsprechende Antwort auf die angepasste Eingabeaufforderung AP aus, welche mithilfe einer optional weiterverarbeiteten Antwort R an den Benutzer zurückgegeben wird und beispielsweise eine Aussage über eine, durch das Modell prädizierte Wartung des technischen Geräts TD1 umfasst.

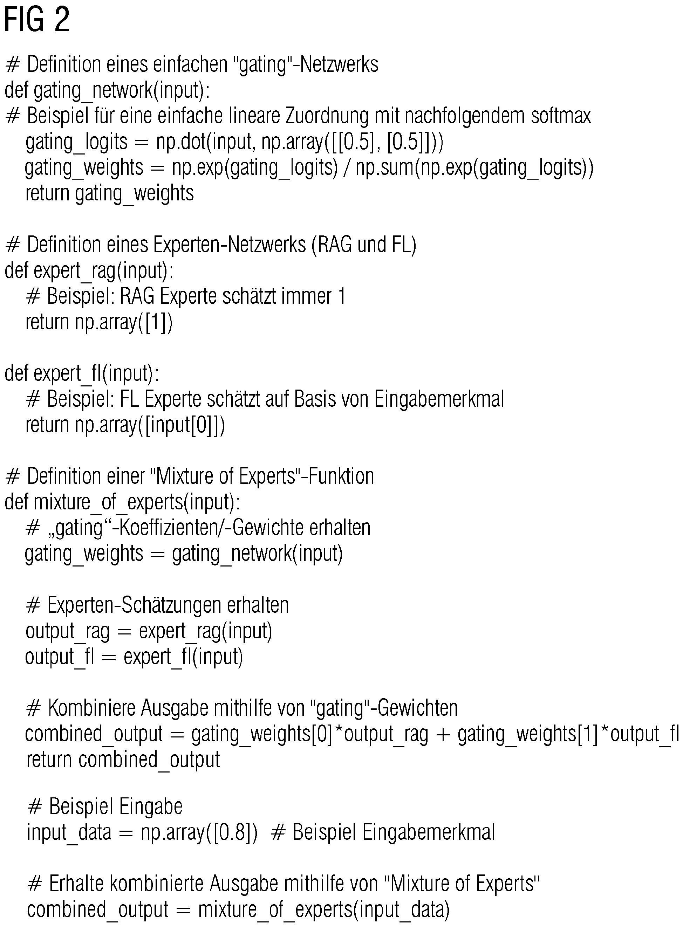

**Fig. 2** zeigt ein Ausführungsbeispiel der Erfindung in Form eines Pseudocodes für das erfindungsgemäße Verfahren, wobei eine Definition eines einfachen "gating"-Netzwerks beschrieben ist.

Zunächst ist Beispiel für eine einfache lineare Zuordnung mit nachfolgendem softmax dargestellt.

In der Mathematik ist die sogenannte Softmax-Funktion oder normalisierte Exponentialfunktion eine Verallgemeinerung der logistischen Funktion, die einen K-dimensionalen Vektor z mit reellen Komponenten in einen K-dimensionalen Vektor σ(z), ebenfalls als Vektor reeller Komponenten in den Wertebereich (0,1) transformiert, wobei sich die Komponenten zu 1 aufsummieren.

Dann erfolgt eine Definition eines Experten-Netzwerks für RAG und FL, wobei beispielsweise der RAG-Experte immer Eins schätzt, und der FL-Experte auf Basis eines Eingabemerkmals schätzt.

Es ist ferner eine Definition einer "Mixture of Experts"-Funktion angegeben, bei welcher die Gating-Koeffizienten/-Gewichte Werte erhalten, und außerdem Experten-Schätzungen zugewiesen werden und eine kombinierte Ausgabe mithilfe der Gating-Gewichte erfolgt.

Es ist ferner ein Beispiel für Eingabemerkmale angeführt.

Abschließend ist gezeigt, wie eine kombinierte Ausgabe mithilfe von "Mixture of Experts" erhalten werden kann.

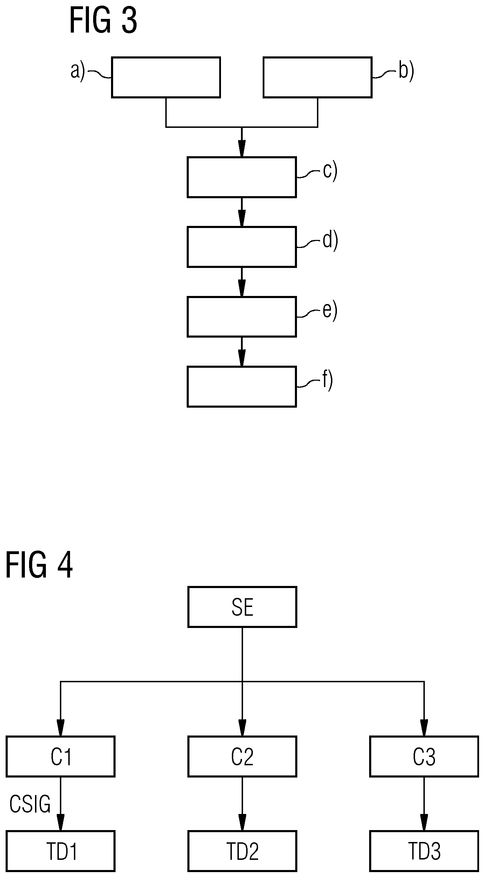

**Fig. 3** zeigt ein weiteres Ausführungsbeispiel der Erfindung in Form eines Flussdiagramms.

Das Verfahren zum Betrieb eines jeweiligen technischen Geräts TD1-TD3 mit einer jeweiligen Steuervorrichtung am Klienten C1-C3 kann zumindest in einzelnen Schritten computerimplementiert sein.

Folgende Schritte sind dabei umfasst:
a) Bereitstellen einer Benutzer-Anfrage Q betreffend den Betrieb des technischen Geräts TD1,
b) Bereitstellen eines trainierten Modells auf Basis künstlicher Intelligenz B-LLM zum Betrieb des technischen Geräts TD1,
c) Bilden einer Such-Anfrage S aus der Benutzer-Anfrage Q, und Bestimmen einer ersten Antwort auf die Such-Anfrage S durch ein verbundenes "Retrieval-Augmented Generation"-, RAG-, System, welches durch eine verbundene erste Rechenvorrichtung gebildet ist,
d) Bilden einer Schätzungs-Anfrage P aus der Benutzer-Anfrage Q, und Bestimmen einer zweiten Antwort auf die Schätzungs-Anfrage P durch ein verbundenes "föderiertes Lernen"-, FL-, System zum Betrieb des technischen Geräts TD1, welches durch eine verbundene zweite Rechenvorrichtung gebildet ist,
e) Kombinieren der ersten Antwort mit der zweiten Antwort mithilfe einer bereitgestellten Gewichts-Funktion, und Erzeugen einer angepassten Eingabeaufforderung AP für das Modell B-LLM mithilfe der Gewichts-Funktion, und Bestimmen einer Antwort RES auf die angepasste Eingabeaufforderung mithilfe des Modells B-LLM, durch eine verbundene dritte Rechenvorrichtung,
f) Betreiben des technischen Geräts TD1 durch die Steuervorrichtung mithilfe von Steuersignalen CSIG, welche der dritten Rechenvorrichtung aus der zuvor erhaltenen Antwort RES abgeleitet werden.

Die Benutzer-Anfrage Q kann entweder manuell durch einen Benutzer U oder auch automatisch durch eine entsprechende Betriebsüberwachungs-Vorrichtung erfolgen.

Das RAG-System umfasst dabei bevorzugt eine Datenbank und/oder ein vorab trainiertes Modell auf Basis künstlicher Intelligenz zum Betrieb des technischen Geräts TD1, welche jeweils eine spezifische Datenmenge SDS inkludiert.

Die spezifische Datenmenge SDS beschreibt den Betrieb des technischen Geräts TD1 in seiner Betriebsumgebung und/oder Anwendung.

Die Betriebsumgebung beschreibt die physische Anordnung und/oder physikalischen Betriebsparameter des technischen Geräts.

Das Verfahren zum Betrieb des technischen Geräts TD1 kann wiederholt ausgeführt werden.

Dabei werden jeweilige physikalische Betriebsparameter zum Betrieb des technischen Geräts TD1 erfasst.

Für die Betriebsparameter sind vorbestimmte Wertebereiche festgelegt.

Für die jeweiligen Betriebsparameter sind jeweilige Gewichts-Funktionen festgelegt.

Im Schritt e) wird eine, dem aktuellen Betriebsparameter entsprechende Gewichts-Funktion angewandt, welche dynamisch bestimmt oder ausgewählt werden kann.

Es ist vorteilhaft, wenn jeweilige Gewichts-Funktionen definiert sind, welche aufgrund von Kombinationen von Werten oder Wertebereichen der individuellen physikalischen Betriebsparametern festgelegt sind.

Die Gewichts-Funktionen können durch ein Gewichts-Modell auf Basis künstlicher Intelligenz abgebildet sein, welches zur Auswahl der aktuellen Gewichts-Funktion verwendet wird.

Die physikalischen Betriebsparameter können elektrische Betriebsparameter und/oder mechanische Betriebsparameter und/oder thermische Betriebsparater und/oder meteorologische Betriebsparameter sein.

Das FL-System umfasst in diesem Beispiel ein vorab trainiertes Modell auf Basis künstlicher Intelligenz zum Betrieb des technischen Geräts TD1, wobei das Modell-Training mithilfe von Betriebsdaten und Betriebsparametern vom Betrieb des technischen Geräts TD1 durchgeführt wird, beispielsweise mit zulässigen und/oder unzulässigen Wertebereichen für diese Betriebsdaten und Betriebsparameter, und optional durch Anwendung von entsprechenden Markierungen (engl. "label").

Dieses Modell wird auf einem Klienten-Server-System mit einem Server und zumindest einem Klienten bereitgestellt.

Das Modell wird dabei aus einem globalen Modell auf dem Server und einem jeweiligen lokalen Modell auf dem zumindest einen Klienten erzeugt.

Die Steuersignale CSIG weisen bevorzugt Steuerinstruktionen zur Ausführung durch einen Prozessor auf.

Die Steuervorrichtung ist hier von einem Klienten eines Klienten-Server-Systems umfasst, und ist vorzugsweise eine Edge-Vorrichtung.

Die erste, die zweite und die dritte Rechenvorrichtung können miteinander kommunizieren und sind bevorzugt von einer gemeinsamen Rechenvorrichtung gebildet.

Die erzeugte Eingabeaufforderung B-LLM bezieht sich auf ein bereitgestelltes, vorab trainiertes großes Sprachmodell.

**Fig. 4** zeigt ein System als Ausführungsbeispiel der Erfindung in Form eines Klienten-Server-Systems, auf welchem das erfindungsgemäße Verfahren ausgeführt werden kann.

Das Klienten-Server-System weist einen Server SE und Klienten C1-C3 auf, welche mit jeweiligen technischen Geräten TD1-TD3 verbunden sind, und über entsprechende jeweilige Steuersignale CSIG mit Steuerinstruktionen angesteuert werden.

Eine Benutzeranfrage betreffend den Betrieb des technischen Geräts kann beispielsweise durch den Benutzer U an dem Klienten C1 durchgeführt werden.

Dementsprechend umfasst das Klienten-Server-System einen Prozessor und einen Speicher, um des erfindungsgemäßen Verfahrens auszuführen, wobei Teile des Verfahrens vorzugsweise auf dem leistungsfähigen Server SE ausgeführt werden.

Die Steuervorrichtung kann dabei von einem jeweiligen Klienten C1-C3 des Klienten-Server-Systems umfasst sein, und ist vorzugsweise eine Edge-Vorrichtung, besonders bevorzugt eine Edge-Vorrichtung mit einer Rechenvorrichtung in Form eines ASIC- oder FPGA-Halbleiter-Bauteils.

*Unabhängig vom grammatikalischen Geschlecht eines bestimmten Begriffes sind Personen mit männlicher, weiblicher oder anderer Geschlechteridentität mit umfasst.*

### Bezugszeichenliste

- AP: angepasste Eingabeaufforderung
- B-LLM: Basis von großem Sprachmodell (engl. "base large language model")
- C1-C3: Klient
- CMoE: Kombination "Mixture of Experts"
- CSIG: Steuersignal, Steuerinstruktionen
- FLM: föderiertes Lernmodell
- LDS: Große Datenmenge (engl. "large dataset")
- P: Schätzungs-Anfrage
- PT: Vor-Training (engl. "pre-training")
- Q: Benutzer-Anfrage
- QAS: Anfrage-/Antwort-System
- R, RES: Antwort
- S: Such-Anfrage
- SDS: spezifische Datenmenge, nach Organisation/Domäne
- SE: Server
- TD1-TD3: technisches Gerät
- U: Nutzer

## Patentansprüche

1. Computer-implementiertes Verfahren zum Betrieb eines technischen Geräts (TD1) mit einer Steuervorrichtung, umfassend folgende Schritte:
a) Bereitstellen einer Benutzer-Anfrage (Q) betreffend den Betrieb des technischen Geräts (TD1),
b) Bereitstellen eines trainierten Betriebs-Modells auf Basis künstlicher Intelligenz (B-LLM) zum Betrieb des technischen Geräts (TD1),
c) Bilden einer Such-Anfrage (S) aus der Benutzer-Anfrage (Q), und Bestimmen einer ersten Antwort auf die Such-Anfrage (S) durch ein verbundenes "Retrieval-Augmented Generation"-, RAG-, System, welches durch eine verbundene erste Rechenvorrichtung gebildet ist,
d) Bilden einer Schätzungs-Anfrage (P) aus der Benutzer-Anfrage (Q), und Bestimmen einer zweiten Antwort auf die Schätzungs-Anfrage (P) durch ein verbundenes "föderiertes Lernen"-, FL-, System zum Betrieb des technischen Geräts (TD1), welches durch eine verbundene zweite Rechenvorrichtung gebildet ist,
e) Kombinieren der ersten Antwort mit der zweiten Antwort mithilfe einer bereitgestellten Gewichts-Funktion, und Erzeugen einer angepassten Eingabeaufforderung (AP) für das Betriebs-Modell (B-LLM) mithilfe der Gewichts-Funktion, und Bestimmen einer Antwort (RES) auf die angepasste Eingabeaufforderung (AP) mithilfe des Betriebs-Modells (B-LLM), durch eine verbundene dritte Rechenvorrichtung,
f) Betreiben des technischen Geräts (TD1) durch die Steuervorrichtung mithilfe von Steuersignalen (CSIG), welche der dritten Rechenvorrichtung aus der zuvor erhaltenen Antwort (RES) abgeleitet werden.

2. Verfahren nach dem vorhergehenden Anspruch, wobei das RAG-System eine Datenbank und/oder ein vorab trainiertes Modell auf Basis künstlicher Intelligenz zum Betrieb des technischen Geräts (TD1) umfasst, welche jeweils eine spezifische Datenmenge (SDS) inkludiert, welche den Betrieb des technischen Geräts (TD1) in seiner Betriebsumgebung und/oder Anwendung beschreibt, wobei die Betriebsumgebung die physische Anordnung und/oder physikalischen Betriebsparameter des technischen Geräts beschreibt.

3. Verfahren nach einem der vorhergehenden Ansprüche, wobei das Verfahren zum Betrieb des technischen Geräts (TD1) wiederholt ausgeführt wird und dabei jeweilige physikalische Betriebsparameter zum Betrieb des technischen Geräts (TD1) erfasst werden, und für die Betriebsparameter vorbestimmte Wertebereiche festgelegt sind, für welche jeweilige Gewichts-Funktionen festgelegt sind, und im Schritt e) eine, dem aktuellen Betriebsparameter entsprechende Gewichts-Funktion angewandt wird.

4. Verfahren nach dem vorhergehenden Anspruch, wobei die Gewichts-Funktion für eine jeweilige Kombination von Werten oder Wertebereichen der individuellen physikalischen Betriebsparametern festgelegt ist, und die Gewichts-Funktion durch ein Gewichts-Modell auf Basis künstlicher Intelligenz abgebildet ist, welches zur Auswahl der Gewichts-Funktion verwendet wird.

5. Verfahren nach einem der vorhergehenden Ansprüche, wobei die physikalischen Betriebsparameter elektrische Betriebsparameter und/oder mechanische Betriebsparameter und/oder thermische Betriebsparater und/oder meteorologische Betriebsparameter sind.

6. Verfahren nach einem der vorhergehenden Ansprüche, wobei das FL-System ein vorab trainiertes Modell auf Basis künstlicher Intelligenz zum Betrieb des technischen Geräts (TD1) umfasst, welches auf einem Klienten-Server-System mit einem Server und zumindest einem Klienten bereitgestellt wird, und aus einem globalen Modell auf dem Server und einem jeweiligen lokalen Modell auf dem zumindest einen Klienten erzeugt wird.

7. Verfahren nach einem der vorhergehenden Ansprüche, wobei die Steuersignale (CSIG) Steuerinstruktionen zur Ausführung durch einen Prozessor aufweisen.

8. Verfahren nach einem der vorhergehenden Ansprüche, wobei die Steuervorrichtung von einem Klienten eines Klienten-Server-Systems umfasst ist, und vorzugsweise eine Edge-Vorrichtung ist.

9. Verfahren nach einem der vorhergehenden Ansprüche, wobei die erste, die zweite und die dritte Rechenvorrichtung von einer gemeinsamen Rechenvorrichtung gebildet sind.

10. System zum Betrieb eines technischen Geräts mit einem verbundenen Steuergerät, ferner umfassend einen Prozessor und einen Speicher, wobei das System dazu eingerichtet ist, das Verfahren nach einem der vorhergehenden Ansprüche auszuführen.

11. System nach dem vorhergehenden Anspruch, wobei das System ein Klienten-Server-Systems ist, und die Steuervorrichtung von einem Klienten (C1) des Klienten-Server-Systems umfasst ist, und vorzugsweise eine Edge-Vorrichtung ist.

12. Computer-Programm-Produkt, umfassend Befehle, die bei der Ausführung des Programms durch einen Computer diesen veranlassen, das Verfahren/die Schritte des Verfahrens nach einem der vorhergehenden Verfahrens-Ansprüche auszuführen.
